# EUROPEAN PATENT SPECIFICATION

(11) **EP 1 718 689 B1**
(45) Date of publication and mention of the grant of the patent: **10.03.2010**
(21) Application number: 04805000.9
(22) Date of filing: 22.12.2004
(51) Int. Cl.: C08G 2/00

(54) **SILANE FORMULATION FOR MOISTURE-CROSSLINKING HYBRID ADHESIVES AND SEALANTS**
SILANHALTIGE ZUBEREITRUNG FÜR FEUCHTIGKEITSVERNETZENDE HYBRIDKLEB- UND HYBRIDDICHTSTOFFE
FORMULATION DE SILANE POUR ADHESIFS ET AGENTS D'ETANCHEITE HYBRIDES A RETICULATION PAR HUMIDITE

(30) Priority: 21.02.2004 DE 102004008668
(43) Date of publication of application: 08.11.2006
(73) Proprietor: Evonik Degussa GmbH, 45128 Essen (DE)
(72) Inventor: BARFURTH, Dieter, 79618 Rheinfelden (DE); MACK, Helmut, 83278 Traunstein (DE)
(86) International application number: PCT/EP2004/053668
(87) International publication number: WO 2005/080462

(56) References cited:
- PATENT ABSTRACTS OF JAPAN vol. 016, no. 066 (C-0912), 19 February 1992 (1992-02-19) & JP 03 263421 A (CEMEDINE CO LTD), 22 November 1991 (1991-11-22)
- PATENT ABSTRACTS OF JAPAN vol. 015, no. 145 (C-0823), 12 April 1991 (1991-04-12) & JP 03 024165 A (CEMEDINE CO LTD; others: 01), 1 February 1991 (1991-02-01)

## Description

The present invention relates to a new silane formulation and to its use for moisture-crosslinking hybrid polymers.

Hybrid polymers for adhesives and sealants, also called hybrid compounds below, are gaining increasingly in importance in the building industry and in other branches of industry. The applications are diverse and certainly include applications in the field of load-bearing components. As the base polymers in hybrid compounds use is made of polymers including amorphous polyalphaolefins, polysulfides, acrylates, polyurethanes, MS^{®} polymer (MS^{®} = "modified silicones", silane-terminated polyethers, brand name of the company KANEKA), and also oxime-functional and alkoxy-functional silicones.

Besides the base polymer the hybrid compounds are based on filler and plasticizer ingredients. A hybrid compound may further include additives such as pigments, solvents, and rheological assistants.

Hybrid compounds are generally produced by mixing specific quantities of the ingredients in a heatable and evacuable mixing apparatus with a double-action stirrer mechanism (planetary mixer) and then dispensing the mixture into cartridges.

A typical feature of all hybrid polymers is that of crosslinking via a Si-O-Si network. Crosslinking by way of terminal silylalkoxy or silyloxime groups is usual. Crosslinking may also take place, however, by way of silylalkoxy or silyloxime groups which are randomly distributed within the base polymer, as in the case of polyalphaolefins and polyacrylate dispersions, for example.

The hybrid adhesives and hybrid sealants can be formulated to one-component systems but also to two-component systems (also referred to below for short as 1K or 2K systems).

In 2K systems the adhesion promoter, generally an aminosilane, and the crosslinking catalyst are formulated into the curing component, separate from the base polymer component.

In 1 K systems it is usual not to add the adhesion promoter and the crosslinking catalyst until toward the end of compounding.

The use of aminosilanes in hybrid adhesives and sealants results in qualities including improved dry and wet adhesion, improved moisture resistance, crosslinking flexibility, improved wetting, improved mechanical properties, improved dispersion of filler, and solvent resistance.

The use of tin catalysts has a beneficial effect on skin formation time and on volume curing.

With regard both to the preparation of the 2K system and to the compounding of the 1 K system, however, it is inconvenient to have two or more ingredients to acquire, to stock, i.e., to store - hazardous substances in particular subject to special statutory regulations - and to weight out, to meter in, and to incorporate. Generally speaking, there is a desire on the part of the manufacturers of 2K systems and the compounder to minimize the number of ingredients and also of operations.

PATENT ABSTRACTS OF JAPAN vol. 016, no. 066 (C-0912), 19 February 1992 (1992-02-19) & JP 03 263421 A (CEMEDINE CO LTD), 22 November 1991 (1991-11-22) and PATENT ABSTRACTS OF JAPAN vol. 015, no. 145 (C-0823), 12 April 1991 (1991-04-12) & JP 03 024165 A (CEMEDINE CO LTD; others: 01), 1 February 1991 (1991-02-01) disclose resin composition for use as an adhesive of sealant comprising an epoxy resin, a modified silicone resin and a dehydrating reaction product of an amine alkoxysilane and a carbonyl compound. The catalyst may be dibutyltin dilaurate.

It was an object of the present invention to provide a further means of compounding moisture-crosslinking hybrid adhesives and sealants.

The invention achieves this object in accordance with the features of the claims.

Surprisingly it has been found that a physical mixture in particular, i.e., a formulation composed essentially of at least on aminosilane adhesion promoter and at least one tin catalyst, in particular in the form of a liquid and homogeneous mixture, and advantageously, leads to a distinct simplification or reduction in complexity in the preparation of compounds and also their ingredients, in an unexpectedly simple and economic way, particularly as regards starting material acquisition, preparation, stock control, weighing out, and metering during the compounding of the hybrid adhesive or sealant. In other words this simplification or reduction in complexity is achieved by virtue of the fact that, as regards the acquisition of ingredients, it is no only necessary to acquire one starting material from one supplier rather than the two ingredients, aminosilane and crosslinking catalyst, from two different suppliers; to store and/or control now only one starting material rather than two starting materials as before; and, during the processing of the hybrid adhesive or sealant by compounding, to weigh out, meter in, and incorporate now only one starting material mixture, namely the formulation of the invention, instead of the aforementioned two starting materials, thereby providing a significant time and cost saving. The high product quality obtained to date is at least matched when the formulation of the invention is employed. Furthermore, the present formulation can be tailored specifically to one particular base polymer and adjusted specifically.

The present invention accordingly provides a composition (formulation) consisting of the following components:
(i) at least one aminoalkoxysilane and/or at least one aminoalkoxysiloxane and
(ii) at least one tin compound.

The formulation of the invention preferably comprises as component (i) at least one aminoalkoxysilane and/or -siloxane from the following groups:
- primary monoaminoalkyl-functional, trialkoxy-functional, monomeric silanes, such as 3-aminopropyltrimethoxysilane and 3-aminopropyltriethoxysilane,
- primary monoaminoalkyl-functional, alkyl-functional, dialkoxy-functional, monomeric silanes, such as 3-aminopropylethyldimethoxysilane and 3-aminopropylmethyldiethoxysilane,
- primary and secondary diaminoalkyl-functional, trialkoxy-functional, monomeric silanes, such as N-(2-aminoethyl)-3-aminopropyltrimethoxysilane and N-(2-aminoethyl)-3-aminopropyltriethoxysilane,
- primary and secondary diaminoalkyl-functional, dialkoxy-functional, monomeric silanes, such as N-(2-aminoethyl)-3-aminopropylmethyldimethoxysilane and N-(2-aminoethyl)-3-aminopropylmethyldiethoxysilane,
- secondary monoaminoalkyl-functional, trialkoxy-functional, monomeric silanes, such as N-(n-butyl)-3-aminopropyltrimethoxysilane, N-(n-butyl)-3-aminopropyltriethoxysilane, bis(3-trimethoxysilylpropyl)amine, and bis(3-triethoxysilylpropyl)amine,
- secondary monoaminoalkyl-functional, dialkoxyfunctional, monomeric silanes, such as N-(n-butyl)-3-aminopropylmethyldimethoxysilane, N-(n-butyl)-3-aminopropylmethyldiethoxysilane, bis(3-methyldimethoxysilylpropyl)amine, and bis(3-methyldiethoxysilylpropyl)amine, and
- aminoalkyl-/alkoxy-siloxanes, i.e., oligomeric aminosilanes as can be taken in particular from EP 0 997 469, and also cooligomeric aminoorganosilanes such as aminoalkyl-/alkyl-/alkoxy-siloxanes, in particular according to EP 1 304 345, DYNASYLAN^{®} 1146 for example.

As component (i) it is also possible, however, to use mixtures of the aforementioned silanes and/or siloxanes.

It is noted that the amino-functional siloxanes in the abovementioned property rights are included in their entirety in the present disclosure.

As component (ii) the formulation of the invention comprises preferably at least one tin compound crosslinking catalyst from the group consisting of tin halide, such as tin(II) chloride and tin(IV) chloride, tin oxides/hydroxides, such as tin(II) hydroxide, tin(II) oxide, tin(IV) oxide hydroxide, and tin dioxide, and also tin(II) sulfate, tin(IV) sulfate, and the hydrates of the aforementioned tin compounds, alkyltin chlorides and mixtures thereof, such as di-n-butyltin dichloride and di-n-octyltin dichloride, alkyltin oxides, such as di-n-butyltin oxide and di-n-octyltin oxide, dibutyltin carboxylates, such as di-n-butyltin diacetate, di-n-butyltin dilaurate, di-n-butyltin maleate, di-n-butyltin bis-2-ethylhexanoate, and di-n-butyltin dineodecanoate, dioctyltin dicarboxylates, such as di-n-octyltin diacetate, di-n-octyltin dilaurate, di-n-octyltin maleate, di-n-octyltin bis-2-ethylhexanoate, and di-n-octyltin dineodecanoate, and dialkyltin complexes, such as di-n-butyltin diacetylacetonate, for example. Those tin compounds which can be employed with particular advantage in the mixtures of the invention are generally those which dissolve immediately or after heating in the stated aminosilanes and/or -siloxanes.

The formulation of the invention comprises components (i) and (ii) suitably in a weight ratio of from 1 000:1 to 1 000:2 000, preferably from 1 000:50 to 1 000:1 000, in particular from 1 000:333 to 1 000:500.

A formulation of the invention is generally prepared by first introducing the silane and/or siloxane, which is generally the less viscous component, and adding the tin compound, which is generally more viscous or solid, in portions with stirring. Formulations of the invention are predominantly clear and highly mobile liquids, which in contrast to the behavior of many organotin compounds are still liquid, and can therefore be handled, at temperatures around 0°C.

Formulations of the invention can be used advantageously, though not exclusively, both in the production of 2K systems for hybrid compounds and in the production of hybrid compounds starting from 1 K systems.

The present invention accordingly also provides for the use of a formulation of the invention for producing two-component mixtures for compounding moisture-crosslinking hybrid compounds.

The present invention additionally provides for the use of a formulation of the invention for direct use in the compounding of moisture-crosslinking hybrid compounds starting from one-component systems.

The invention provides in particular for the use of a formulation of the invention for producing moisture-crosslinking hybrid adhesives and sealants for which the base polymer is preferably a silane-terminated polyether formulation - the "MS polymer" grades, with various molecular weights, for example - or a *silane-terminated polyurethane formulation. These polymers are generally obtainable through addition reactions of allyl-containing polyethers with hydrosilanes or of isocyanato-containing polyurethane prepolymers with aminosilanes.

The present invention is illustrated further, without restriction to its scope of protection, by the examples below.

### Examples:

### Examples 1 to 6

### Formulations comprising amino-functional silane and/or siloxane and tin compound

### Preparation:

A 1 000 ml jacketed three-necked glass flask provided with dropping funnel, stirrer, and thermometer is charged with the aminosilane or aminosiloxane and this initial charge is mixed with the tin compound via the dropping funnel, with stirring.

### Composition:

- Example 1:: mixture of 65 parts by weight 3-aminopropyltrimethoxysilane (DYNASYLAN^{®} AMMO) and 35 parts by weight dibutyltin diketonate
- Example 2:: mixture of 70 parts by weight N-(2-aminoethyl)-3-amino- propyltrimethoxysilane (DYNASYLAN^{®} DAMO) and 30 parts by weight dibutyltin diketonate
- Example 3:: mixture of 60 parts by weight aminoalkyl-/alkyl-/alkoxy-siloxane mixture (DYNASYLAN^{®} 1146) and 40 parts by weight dibutyltin diketonate
- Example 4:: mixture of 85 parts by weight 3-aminopropyltrimethoxysilane (DYNASYLAN^{®} AMMO) and 15 parts by weight dibutyltin dilaurate
- Example 5:: mixture of 93 parts by weight N-(2-aminoethyl)-3- aminopropyltrimethoxysilane (DYNASYLAN^{®} DAMO) and 7 parts by weight dibutyltin dilaurate
- Example 6:: mixture of 90 parts by weight aminoalkyl-/alkyl-/alkoxy-siloxane mixture (DYNASYLAN^{®} 1146) and 10 parts by weight dibutyltin dilaurate

Physical properties of a formulation comprising silane and/or siloxane and tin compound:

Data for a formulation according to example 1 (65 parts by weight 3-aminopropyltrimethoxysilane (DYNASYLAN^{®} AMMO) and 35 parts by weight dibutyltin diketonate):

| **Parameter** | **Unit** | **Measurement method** | **Measured value** |
|---|---|---|---|
| Appearance | | | clear yellow liquid |
| Sn content | % | | 15.6 |
| SiO₂ content | % | AN-SAA 0754 | 14.6 |
| Nitrogen content | % | AN-SAA 0220 | 3.4 |
| Hydrolyzable chloride | mg/kg | AN-SAA 0412 | 20 |
| Flash point | °C | EN 22719 | > 95 |
| Density (20°C) | g/cm³ | DIN 51757 | 1.100 |
| Refractive index (20°C) | n^{D} | DIN 51423 | 1.469 |
| Viscosity (20°C) | mPa s | DIN 53019 | 13.5 |
| Color number (APHA) | g Pt-Co/l | ISO 6271 | 770 |
| Color number Gardner | Gard | ISO 4630 | 4 |
| Pour point | °C | DIN ISO 3016 | -60 |
| Shelf life | | | 6 months from preparation |

Properties of the formulation of the invention in comparison to the tin catalyst alone:

| **Parameter** | **Unit** | **Dibutyltin ketonate** | **Formulation of example 1** |
|---|---|---|---|
| Appearance | | yellowish brown liquid | pale yellow clear liquid |
| Color number (APHA) | g Pt-Co/l | > 1000 | 770 |
| Color number Gardner | Gard | 5 | 4 |
| Density (20°C) | g/cm³ | 1.231 | 1.100 |
| Refractive index (20°C) | n^{D} | 1.525 | 1.469 |
| Viscosity (20°C) | mPa s | 85 | 13.5 |
| Pour point | °C | +18 | -60 |

### Use examples:

### Comparative example

### Preparation of a sealant based on MS-Polymer^{®} on the laboratory scale

The sealant is prepared using a laboratory planetary mixer, in 1-liter cans:
1. First of all the plasticizer (diisodecylphthalate, DIDP) and an amount of the chalk filler corresponding to the plasticizer amount (surface-treated with stearic acid and dried at 110°C for 16 hours) are weighed into the preparation can and the two components are mixed for 10 minutes at 270 stirrer revolutions per minute (rpm).
2. Then the MS-Polymer^{®} binder is added (a 60:40 mixture of MS-Polymer^{®} S 203 H and MS-Polymer^{®} S 303 H).
3. A third of the silane dryer (DYNASYLAN^{®} VTMO, vinyltrimethoxysilane) is added.
4. Addition of the thixotropic agent (CRAYVALIAC^{®} SL; microcrystalline polyamide).
5. The remainder of the chalk filler is added in portions and the composition is homogenized while being heated at 90°C.
6. The composition is stirred under reduced pressure (about 7 hPa) for 2 hours in order to remove volatile constituents.
7. After the composition has been cooled to about 50°C the remainder of the silane dryer (DYNASYLAN^{®} VTMO) is added.
8. This is followed by addition of the silane adhesion promoter [N-(2-aminoethyl)-3-aminopropyltrimethoxysilane (DYNASYLAN^{®} DAMO)] and
9. addition of the tin catalyst (dibutyltin diketonate).
10. A further vacuum treatment follows, in order to remove bubbles.
11. Throughout steps 2 to 10 of the process stirring is continued without interruption at about 200 to 250 rpm.
12. The resulting sealant is dispensed from the preparation can into cartridges (standard sealant containers, 300 ml capacity).

### Example 7

### Preparation of a sealant based on MS-Polymer^{®} on the laboratory scale

The sealant is prepared using a laboratory planetary mixer, in 1-liter cans:
1. First of all the plasticizer (diisodecylphthalate, DIDP) and an amount of the chalk filler corresponding to the plasticizer amount (surface-treated with stearic acid and dried at 110°C for 16 hours) are weighed into the preparation can and the two components are mixed for 10 minutes at 270 stirrer revolutions per minute (rpm).
2. Then the MS-Polymer^{®} binder is added (a 60:40 mixture of MS-Polymer^{®} S 203 H and MS-Polymer^{®} S 303 H).
3. A third of the silane dryer (DYNASYLAN^{®} VTMO, vinyltrimethoxysilane) is added.
4. Addition of the thixotropic agent (CRAYVALLAC^{®} SL; microcrystalline polyamide).
5. The remainder of the chalk filler is added in portions and the composition is homogenized while being heated at 90°C.
6. The composition is stirred under reduced pressure (about 7 hPa) for 2 hours in order to remove volatile constituents.
7. After the composition has been cooled to about 50°C the remainder of the silane dryer (DYNASYLAN^{®}VTMO) is added.
8. This is followed by addition of the formulation of the invention comprisjng an aminosilane or aminosiloxane (silane adhesion promoter) and a tin compound (catalyst) according to example 1.
9. A further vacuum treatment follows, in order to remove bubbles.
10. Throughout steps 2 to 10 of the process stirring is continued without interruption at about 200 to 250 rpm.
11. The resulting sealant is dispensed from the preparation can into cartridges (standard sealant containers, 300 ml capacity).

### Comparison of the use examples

### Testing of sealants comprising MS-Polymer^{®}, produced in accordance with the general method with separate addition of silane adhesion promoter and tin catalyst (comparative example) and in accordance with example 7

### Sealant formula:

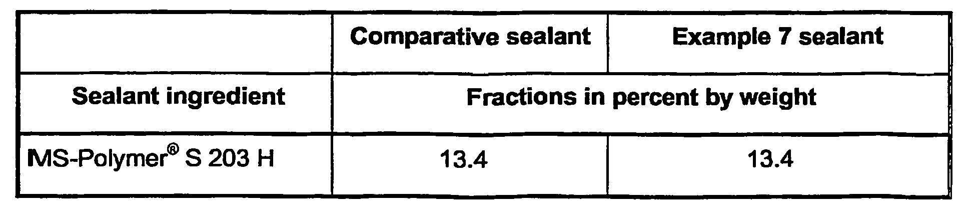

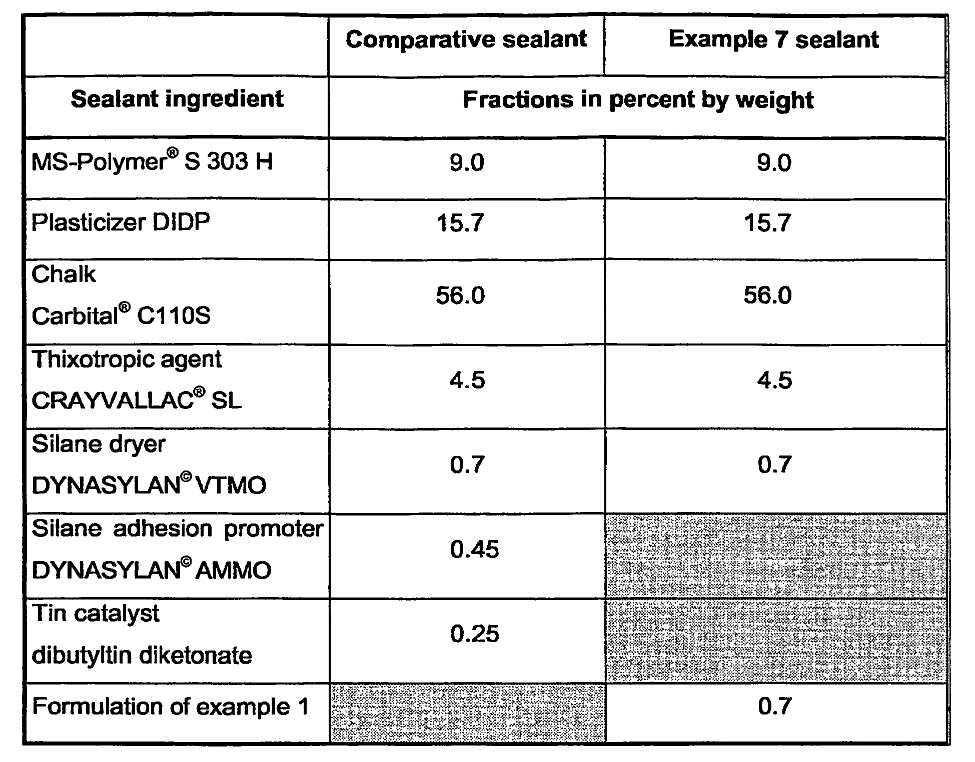

### Results of sealant testing

### a) Curing

| **Sealant** | **Tack-free surface after** | **Drying through 4 mm volume after** | **Drying through 7 mm volume after** | **Drying through 10 mm volume after** |
|---|---|---|---|---|
| Comparative sealant | 4-5 hours | 2 days | 7 days | 11 days |
| Example 7 sealant | 4-5 hours | 2 days | 6 days | 10 days |

### b) Adhesion of the sealant

| **Sealant** | **Adhesion to glass** | **Adhesion to aluminum** | **Adhesion to PVC** |
|---|---|---|---|
| Comparative sealant | removable | difficult to remove | removable |
| Example 7 sealant | difficult to remove | very difficult to remove | difficult to remove |

| | | | |
|---|---|---|---|
| Note: testing is carried out on beads of sealant applied to the substrate by spraying, the test involving an attempt to detach these "beads" from the substrate using the finger. | | | |

### c) Mechanical values

| **Sealant** | **Tensile strength N/mm²** | **Breaking strength N/mm²** | **Breaking elongation %** |
|---|---|---|---|
| Comparative sealant | 1.1 | 0.9 | 904 |
| Example 7 sealant | 1.0 | 1.0 | 913 |

## Claims

1. A composition consisting of the following components:
(i) at least one aminoalkoxysilane and/or at least one aminoalkoxysiloxane and
(ii) at least one tin compounds.

2. The composition as claimed in claim 1,
comprising at least one aminoalkoxysilane and/or -siloxane as component (i) from the group consisting of 3-aminopropyltrimethoxysilane, 3-aminopropyltriethoxysilane, 3-aminopropylmethyldimethoxysilane, 3-aminopropylmethyldiethoxysilane, N-(n-butyl)-3-aminopropyltrimethoxysilane, N-(n-butyl)-3-aminopropyltriethoxysilane, N-(n-butyl)-3-aminopropylmethyldimethoxysilane, N-(n-butyl)-3-aminopropylmethyldiethoxysilane, bis(3-trimethoxysilylpropyl)amine, bis(3-triethoxysilylpropyl)amine, bis(3-methyldimethoxysilylpropyl)amine, bis(3-methyldiethoxysilyipropyl)amine, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, aminoalkyl-/alkoxy-siloxanes, and aminoalkyl-/alkyl-/alkoxy-siloxanes.

3. The composition as claimed in claim 1 or 2,
comprising at least one tin compound as component (ii) from the group consisting of tin halides, tin oxides and hydroxides, tin(II) sulfate, tin(IV) sulfate, alkyltin chlorides, alkyltin oxides, dibutyltin carboxylates, dioctyltin carboxylates, and dialkyltin complexes.

4. The composition as claimed in any one of claims 1 to 3,
comprising a weight ratio of component (i) to (ii) of from 1 000:1 to 1 000:800.

5. The use of a composition as claimed in any one of claims 1 to 4 in the production of two-component mixtures for compounding moisture-crosslinking hybrid compounds.

6. The use of a composition as claimed in any one of claims 1 to 4 for direct use in the compounding of moisture-crosslinking hybrid compounds starting from one-component systems.

7. The use as claimed in claim 5 or 6 in moisture-crosslinking hybrid adhesives and sealants.

8. The use as claimed in any one of claims 5 to 7 for which the base polymer used is a silane-terminated polyether or a silane-terminated polyurethane.

## Patentansprüche

1. Zubereitung bestehend aus den Komponenten
(i) mindestens einem Aminoalkoxysilan und/oder mindestens einem Aminoalkoxysiloxan und
(ii) mindestens einer Zinnverbindung.

2. Zubereitung nach Anspruch 1, **gekennzeichnet durch** mindestens ein Aminoalkoxysilan bzw. -siloxan als Komponente (i) aus der Reihe 3-Aminopropyltrimethoxysilan, 3-Aminopropyltriethoxysilan, 3-Aminopropylmethyldimethoxysilan, 3-Aminopropylmethyldiethoxysilan, N-(n-Butyl)-3-aminopropyltrimethoxysilan, N-(n-Butyl)-3-aminopropyltriethoxysilan, N-(n-Butyl)-3-aminopropylmethyldimethoxysilan, N-(n-Butyl)-3-aminopropylmethyldiethoxysilan, Bis(3-trimethoxysilylpropyl)amin, Bis(3-triethoxysilylpropyl)amin, Bis(3-methyldimethoxysilylpropyl)amin, Bis(3-methyldiethoxysilylpropyl)amin, N-(2-Aminoethyl)-3-aminopropyltrimethoxysilan, N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethxoysilan, Aminoalkyl-/Alkoxy-Siloxane sowie Aminoalkyl-/Alkyl-/Alkoxy-Siloxane.

3. Zubereitung nach Anspruch 1 oder 2, **gekennzeichnet durch** mindestens eine Zinnverbindung als Komponente (ii) aus der Reihe der Zinnhalogenide, Zinnoxide bzw. -hydroxide, Zinn(II)sulfat, Zinn(IV)sulfat, Alkylzinnchloride, Alkylzinnoxide, Dibutylzinncarboxylate, Dioctylzinncarboxylate sowie der Dialkylzinnkomplexe.

4. Zubereitung nach einem der Ansprüche 1 bis 3, **gekennzeichnet durch** ein Gewichtverhältnis der Komponenten (i) zu (ii) von 1 000 : 1 bis 1 000 : 800.

5. Verwendung einer Zubereitung nach einem der Ansprüche 1 bis 4 bei der Herstellung von Zweikomponentenmischungen für die Compoundierung feuchtigkeitsvernetzender Hybridcompounds.

6. Verwendung einer Zubereitung nach einem der Ansprüche 1 bis 4 für den direkten Einsatz bei der Compoundierung feuchtigkeitsvernetzender Hybridcompounds ausgehend von Einkomponentensystemen.

7. Verwendung nach Anspruch 5 oder 6 in feuchtigkeitsvernetzenden Hybridkleb- und Hybriddichtstoffen.

8. Verwendung nach einem der Ansprüche 5 bis 7, wobei man als Basispolymer einen silanterminierten Polyether oder ein silanterminiertes Polyurethan einsetzt.

## Revendications

1. Composition constituée des composants suivantes :
(i) au moins un aminoalcoxysilane et/ou au moins un aminoalcoxysiloxane ; et
(ii) au moins un composé de l'étain.

2. Composition selon la revendication 1, comprenant au moins un aminoalcoxy-silane et/ou siloxane en tant que composant (i), choisi dans le groupe constitué par le 3-aminopropyltriméthoxysilane, le 3-aminopropyltriéthoxysilane, le 3-aminopropylméthyldiméthoxysilane, le 3-aminopropylméthyldiéthoxysilane, le N-(n-butyl)-3-aminopropyltriméthoxysilane, le N-(n-butyl)-3-aminopropyltriéthoxysilane, le N-(n-butyl)-3-aminopropylméthyldiméthoxysilane, le N-(n-butyl)-3-aminopropylméthyldiéthoxysilane, la bis (3-triméthoxysilylpropyl) amine, la bis(3-triéthoxysilylpropyl)amine, la bis(3-méthyldiméthoxysilylpropyl) amine, la bis(3-méthyldiéthoxysilylpropyl) amine, le N-(2-aminoéthyl)-3-aminopropyltriméthoxysilane, le N-(2-aminoéthyl)-3-aminopropyltriéthoxysilane, le N-(2-aminoéthyl)-3-aminopropylméthyldiméthoxysilane, le N-(2-aminoéthyl)-3-aminopropylméthyldiéthoxysilane, les aminoalkyl/alcoxy-siloxanes et les aminoalkyl/alkyl/alcoxy-siloxanes.

3. Composition selon la revendication 1 ou 2, comprenant au moins un composé de l'étain en tant que composant (ii), choisi dans le groupe constitué par les halogénures d'étain, les oxydes et hydroxydes d'étain, le sulfate d'étain(II), le sulfate d'étain(IV), les chlorures d'alkyl-étain, les oxydes d'alkyl-étain, les carboxylates de dibutyl-étain, les carboxylates de dioctyl-étain et les complexes de dialkyl-étain.

4. Composition selon l'une quelconque des revendications 1 à 3, comprenant un rapport pondéral du composant (i) au composant (ii) de 1 000:1 à 1 000:800.

5. Utilisation d'une composition selon l'une quelconque des revendications 1 à 4 dans la production de mélanges à deux composants pour formuler des composés hybrides à réticulation par l'humidité.

6. Utilisation d'une composition selon l'une quelconque des revendications 1 à 4 à utiliser directement dans la formulation de composés hybrides à réticulation par l'humidité à partir de systèmes à un composant.

7. Utilisation selon la revendication 5 ou 6 dans des adhésifs et agents d'étanchéité hybrides à réticulation par l'humidité.

8. Utilisation selon l'une quelconque des revendications 5 à 7 pour laquelle le polymère de base utilisé est un polyéther à terminaison silane ou un polyuréthane à terminaison silane.
